# EUROPEAN PATENT SPECIFICATION

(11) **EP 2 839 896 B1**
(45) Date of publication and mention of the grant of the patent: **22.11.2017**
(21) Application number: 12874605.4
(22) Date of filing: 16.04.2012
(51) Int. Cl.: B21D 22/00, B21D 22/20, G01N 3/08

(54) **METHOD FOR PREPARING FORMING LIMIT DIAGRAM IN PRESS FORMING, METHOD FOR PREDICTING CRACK AND METHOD OF PRODUCING PRESS PARTS**
VERFAHREN ZUM ZEICHNEN EINES FORMUNGSGRENZWERTDIAGRAMMS FÜR PRESSFORMUNGEN, BRUCHPROGNOSEVERFAHREN UND VERFAHREN ZUR HERSTELLUNG GEPRESSTER KOMPONENTEN
PROCÉDÉ POUR TRACER UN DIAGRAMME DE LIMITE DE FORMAGE POUR FORMAGE À LA PRESSE, PROCÉDÉ DE PRÉDICTION DE FISSURES, ET PROCÉDÉ DE FABRICATION DE COMPOSANTS COMPRIMÉS

(43) Date of publication of application: 25.02.2015
(73) Proprietor: JFE Steel Corporation, Tokyo, 100-0011 (JP)
(72) Inventor: FUJII, Yusuke, Tokyo 100-0011 (JP); SHINMIYA, Toyohisa, Tokyo 100-0011 (JP); YAMASAKI, Yuji, Tokyo 100-0011 (JP); HIGAI, Kazuhiko, Tokyo 100-0011 (JP)
(74) Representative: Stebbing, Timothy Charles
(86) International application number: PCT/JP2012/060216
(87) International publication number: WO 2013/157063

(56) References cited:
- EP-A1- 1 985 989
- EP-A1- 2 390 800
- JP-A- H10 158 792
- JP-A- 2008 272 764
- JP-A- 2010 069 533
- JP-A- 2011 147 949
- JP-A- 2012 011 458
- JP-A- 2012 033 039

## Description

### TECHNICAL FIELD

This invention relates to a method for preparing a forming limit diagram in press forming, a method for predicting crack generation and a method of producing press parts, and more particularly to a method for preparing a forming limit diagram in view of cracks dominated by formability, a method for predicting crack generation, and a method of producing press parts using the latter method.

### RELATED ART

The press forming is one of typical metal working methods for providing parts of desired forms by pressing a metal plate such as steel plate or the like between a pair of dies and shaping the metal plate corresponding to the form of the die, and is used in wide manufacturing applications such as automobile parts, mechanical parts, building members, household electrical goods and the like.

In the press forming, phenomenon of generating cracks in the metal plate to be formed on the way of the press forming is frequently issued in question. As a countermeasure thereof, it is attempted to precisely predict crack generation in the press forming in addition to the enhancement of the formability in the metal plate itself. As a recently well-used method, for example, there is a method of searching press-forming conditions causing no crack by changing various press conditions such as die form, mechanical properties of the metal plate (materials), temperatures of the die and the metal plate, speed of closing the die (press speed), tribological conditions and so on in press forming simulation using a finite element method.

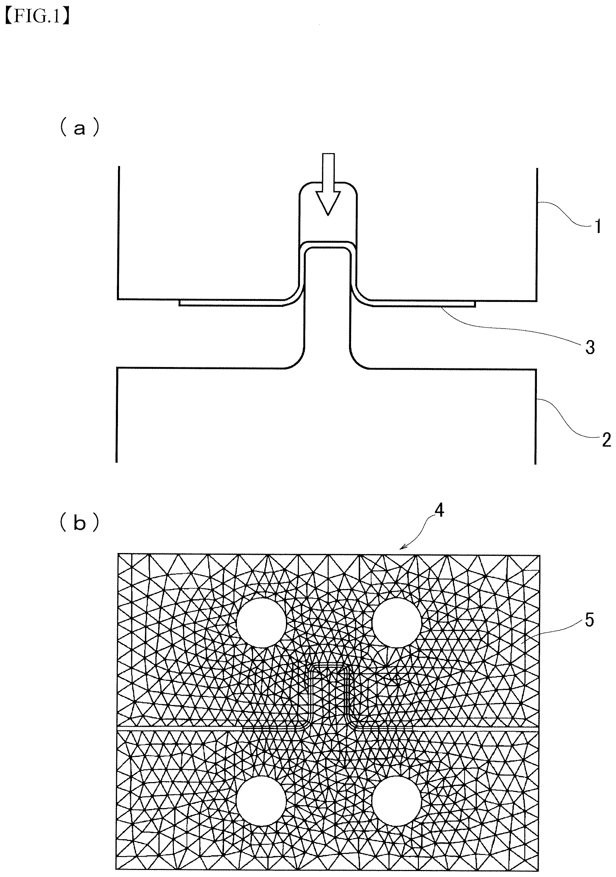

The finite element method is a method wherein when a hat-shaped member as shown in FIG. 1(a) is press-formed as culled, for example, from Patent Document 1, portions simulated by an upper die 1, a lower die 2 and a metal plate 3 are resolved into element groups constituted with hypothetical meshes as shown in FIG. 1(b) and how much stress and strain applied to each element in any direction are analyzed (simulated) at each stage in the press forming.

In the example of FIG. 1(b), the simulated portions are divided into elements of two-dimensional (plane) meshes, but they may be frequently divided into elements of three-dimensional (stereoscopic) meshes. Also, the divided elements may be triangular (triangle pole) as in the simulated portions of the upper die 1 and lower die 2 of FIG. 1(b), or quadrangular (rectangular pillar), or further may be hexagonal (hexagonal column) as not shown. Moreover, in the press forming simulation of the metal plate, thickness center of the metal plate may be frequently divided into elements of tow-dimensional meshes.

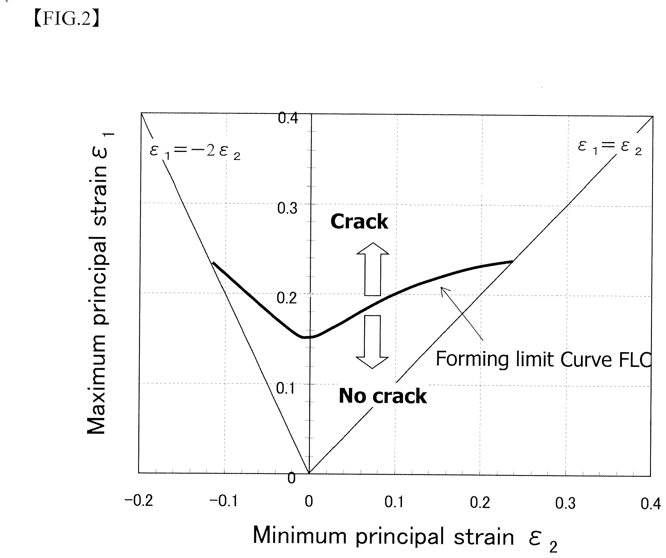

Heretofore, the presence or absence of crack generation in the press forming has been predicted in the press forming simulation of the metal plate using the infinite element method by determining maximum principal strain ε₁ and minimum principal strain ε₂ after the forming at the thickness center of the each element divided into meshes (each scalar) as mentioned above through calculation from a coordinate change of contact points and confirming whether the principal maximum strain ε₁ and principal minimum strain ε₂ are existent in either a cracking zone or a non-cracking zone divided along a forming limit curve FLC of a separately prepared forming limit diagram FLD as shown in FIG. 2, wherein the generation of cracks is predicted when they are existent in the cracking zone.

As the method of preparing the FLD, there are typically Nakajima's method and Marciniak method. These methods are a method wherein several samples of different shapes (widths) marked with various patterns such as scribed circles and the like are used and bulged until breakage or necking is caused by using a spherical head punch (Nakajima's method) or a circular head punch (Marciniak method) having a top curvature radius of 25-50mm and measuring maximum principal strain and minimum principal strain of breakage or necking position from a change of marking after the shaping and two-dimensionally showing the measured results to obtain a forming limit curve (FLC). This FLC indicates a forming limit in the thickness center, which is verified with the press forming simulation calculated with the aforementioned thickness center element to predict the crack generation.
Patent Document 2 discloses systems and methods of predicting sheet metal forming failure using numerical simulations (e.g., finite element analysis). A FEA model is defined for a particular sheet metal forming process. Blank sheet metal is modeled with a plurality of shell elements. Additionally, a deformation path-dependent forming limit diagram (FLD) is converted to a path-independent FLD.
Patent Document 3 discloses using a fracture limit stress line obtained by converting a hole expansion ratio into a stress as a criterion for a fracture. The risk of fracture in a material is evaluated quantitatively by comparing the relationship between data obtained from a numerical analysis using a finite element method and the fracture limit stress line.
Patent Document 4 discloses an estimation method of stretch-flange crack for establishing a design guide or design limit of stretch-flange shape for parts used for automobile and electric home appliance.

### PRIOR ART DOCUMENTS

### PATENT DOCUMENTS

Patent Document 1: JP-A-2008-55488
Patent Document 2: EP 2 390 800 A1
Patent Document 3: EP 1 985 989 A1
Patent Document 4: JP-A-2010-069533

### SUMMARY OF THE INVENTION

### PROBLEMS TO BE SOLVED BY THE INVENTION

According to the inventors' studies, however, cracks are caused in the actual press forming of the metal plates, particularly in the press forming of high-strength steel sheets even under press forming conditions predicting no crack when using the conventional method for predicting crack generation, and hence cases of largely diverging the predicted results from the actual results are frequently generated.

The invention is developed for solving the problems inherent to the above conventional techniques and is to propose a method for preparing a forming limit diagram FLD capable of precisely predicting crack generation in the press forming, a method for predicting crack generation using such FLD, and a method of producing press parts with such a predicting method.

The inventors have made various studies on causes resulting in divergence between prediction of crack generation by the conventional method and result of crack generation in the press forming especially in high-strength steel sheets. As a result, it is clear that as cracks generated in the steel sheet are mentioned cracks mainly dominated by ductility in low-strength, soft materials and cracks mainly dominated by bendability in high-strength, hard materials, and the conventional forming limit diagram FLD determines a forming limit curve FLC from a maximum principal strain and minimum principal strain at thickness center in the press forming or is prepared on the basis of the above crack dominated by ductility, and hence it does not consider the latter crack dominated by bendability at all.

Now, the inventors have made further examinations and found that the crack generation can be precisely predicted by improving the conventional forming limit diagram FLD provided with the forming limit curve FLC from the maximum principal strain and minimum principal strain at thickness center in the press forming to obtain a forming limit diagram FLD considering crack dominated by bendability in addition to the crack prediction based on crack dominated by ductility and further conducting press forming simulation in view of the crack dominated by bendability.

That is, the invention is a method for preparing a forming limit diagram in press forming, characterized in that a forming limit curve is obtained by subjecting a surface, of a steel sheet having a tensile strength of not less than 980 MPa to be press-formed, to marking so as to form a marking pattern, wherein a distance between reference points at centers of individual marking patterns is 0.5-1.0 mm, bulging the steel sheet with a punch having a top minimum curvature radius of 3-10 mm, and measuring, to determine a maximum principal strain and minimum principal strain, at a time of generating cracks on the surface of the steel sheet, at a top portion of the punch, a change in the distance between reference points of the marking pattern.

Also, the invention proposes a method for predicting crack generation in press forming, characterized in that crack generation in the press forming is predicted based on the above forming limit diagram.

Furthermore, the invention proposes a method of producing press parts, characterized in that a steel sheet having a tensile strength of not less than 980 MPa is press-formed under conditions not causing crack generation by predicting the presence or absence of crack generation in the steel sheet using the above method for predicting crack in press forming.

### EFFECT OF THE INVENTION

According to the invention, a forming limit diagram FLD capable of precisely predicting the presence or absence of crack in the press forming can be prepared, so that it is possible to precisely predict the crack generation when various parts such as panel parts for automobiles, structural and skeletal parts and so on are manufactured by press forming, and hence not only the press forming can be performed stably but also the invention can largely contribute to reduce reject rate of press parts.

### BRIEF DESCRIPTION OF DRAWINGS

FIG. 1 is a view illustrating a press forming simulation using an finite element method wherein (a) shows a relation between a die and a material to be formed (metal plate) and (b) shows an example of dividing into meshes;
FIG. 2 is a view illustrating a forming limit diagram (FLD);
FIG. 3 is a view illustrating crack form, wherein (a) is a crack dominated by ductility and (b) is a crack dominated by bending;
FIG. 4 is a view showing form and size of a press-formed part in examples;
FIG. 5 is a view showing a die position generating cracks in contrast with predicted results of conventional FLD and results in press forming when steel sheet A in Table 1 is press-formed;
FIG. 6 is a view showing a die position generating cracks in contrast with predicted values of conventional FLD and results in press forming when steel sheet B in Table 1 is press-formed;
FIG. 7 is a view illustrating a form of a test specimen used in the preparation of FLD in examples;
FIG. 8 is a graph showing an influence of a distance between reference points in marking upon maximum principal strain to be measured;
FIG. 9 is a view showing a sectional form (crack form) of a test specimen after bulging;
FIG. 10 is a view illustrating a shell element used in press forming simulation;
FIG. 11 is a view illustrating a punch used in examples, wherein (a) is a punch used in the conventional FLD preparation and (b) is a punch used in the FLD preparation of the invention;
FIG. 12 is a view showing a comparison between the conventional FLD and the invention FLD obtained in examples;
FIG. 13 is a view plotted on FLD how to change maximum principal strain and minimum principal strain in accordance with a distance from a bottom center point of a die as to a position of crack generation when a steel sheet B in Table 1 is press-formed; and
FIG. 14 is a view showing crack generating die positions predicted from the conventional FLD and the invention FLD in contrast with crack generating die position in press forming.

### EMBODIMENTS FOR CARRYING OUT THE INVENTION

The basic technological idea of the invention will be described below.

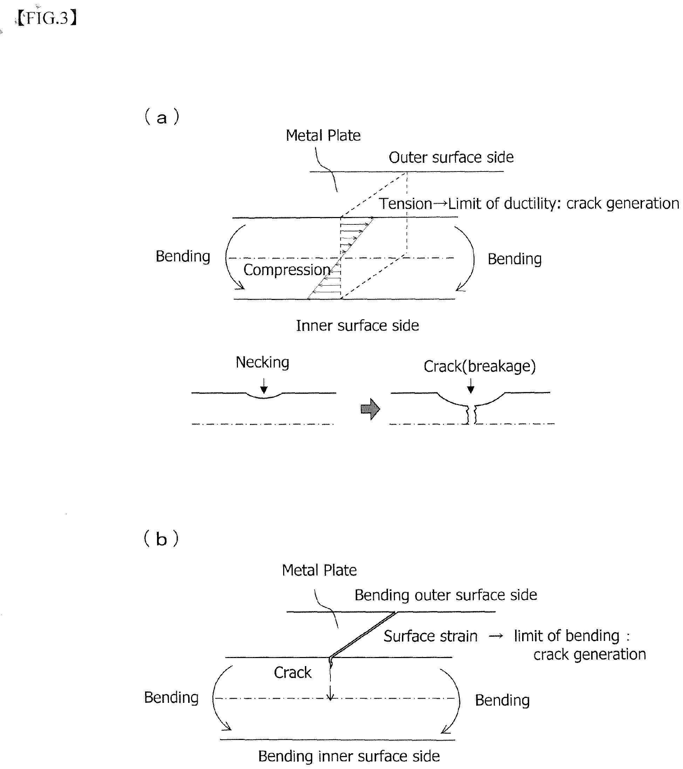

The inventors have noticed that breakage is frequently observed in press forming without constriction (necking) as a tensile strength TS of a steel sheet is increased to 980 MPa or 1180 MPa grade and becomes higher in the strength harder during the studies on the press forming of high-strength steel sheets. Referring to FIG. 3 on this phenomenon, for example, when a low-strength and soft steel sheet is bulged with a round head punch, it is common that as shown in FIG. 3(a), necking is locally caused and an amount of thickness decreased in the necking portion is increased to cause crack. In the high-strength and hard steel sheets having a tensile strength TS of 980 MPa or 1180 MPa grade, however, as shown in FIG. 3(b), it has been confirmed that crack is generated from the surface of the steel sheet and runs into breakage at once.

In the high-strength steel sheet showing the above cracking behavior, it has been confirmed that when the crack generation is predicted by using the conventional FLD, even if the prediction result of no crack is obtained, cracks are generated in the actual press forming, and are particularly frequent at a site(s) having a large bending deformation.

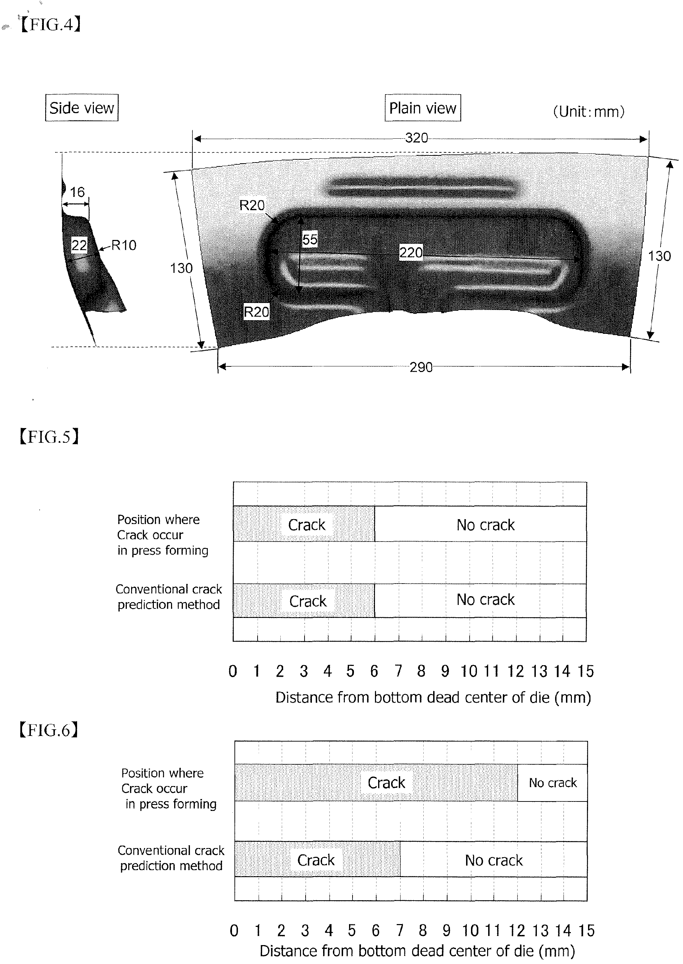

Then, the inventors have checked a position of a die generating cracks (distance from bottom dead center) when two kinds of steel sheets A and B shown in Table 1 having approximately equal tensile strength TS and elongation El and largely different bendability are press-formed into a simulated part form corresponding to a connecting portion of a roof rail at a top of a center pillar for an automobile shown in FIG. 4 with a die (model die) comprised of an upper die and a lower die. The results are shown in FIGS. 5 and 6 in contrast with a position of a die generating cracks predicted with the conventional FLD prepared from maximum principal strain and minimum principal strain in thickness center. Moreover, the position of the steel sheet generating cracks in the press forming corresponds to a site subjected to severe bending work.

**Table 1**

| Symbol of steel sheet | Thickness (mm) | Yield stress YS (MPa) | Tensile strengt h TS (MPa) | Elongation El (%) | Limit bending radius(*) (90° bending) (mm) | Limit bending radius/thic kness |
|---|---|---|---|---|---|---|
| A | 1.62 | 860 | 1085 | 14.5 | 1.5 | 0.9 |
| B | 1.64 | 740 | 1180 | 15.0 | 4.0 | 2.4 |

| | | | | | | |
|---|---|---|---|---|---|---|
| * : maximum bending radius generating cracks | | | | | | |

FIG. 5 shows results of the steel sheet A having an excellent bendability, in which the position of the die at the generation of cracks predicted from FLD prepared by the conventional method is coincident with the position of the die generating cracks in the press forming. In FIG. 6 showing the results of the steel sheet B having poor bendability, however, the position of the die at the generation of cracks predicted from FLD prepared by the conventional method is largely shifted from the position of the die generating cracks in the press forming, which results in poor prediction accuracy.

From the above results, it can be seen that the high-strength steel sheets being strengthened and hardened have two kinds of cracks generated at the sites strongly subjected to bending deformation in the press forming, i.e. crack resulted from progress of thickness reduction in a portion generating local constriction (hereinafter referred to as "crack dominated by ductility") and crack resulted from the generation of crack on the surface of the steel sheet without reduction of thickness and the propagation in thickness direction at once (hereinafter referred to as "crack dominated by bendability") and that when the latter crack dominated by bendability is caused, the prediction accuracy is largely deteriorated in the crack prediction method using the conventional FLD.

Now, the inventors have examined how to solve problems in the conventional method for predicting cracks dominated by ductility and precisely predict crack generation. As a result, it has been found out that crack generation can be precisely predicted by preparing FLD considered with bendability in addition to the conventional FLD only considered with ductility and at the same time determining surface strain (maximum principal strain, minimum principal strain) at each element through press forming simulation using a finite element method and predicting cracks from a comparison between the above FLDs and the surface strain and that in order to prepare the FLD considered with bendability, it is enough to conduct bulging with a punch having a small curvature radius at its top and to determine maximum principal strain and minimum principal strain when surface strain in the generation of cracks on the surface of the steel sheet is defined as a forming limit.

The invention is based on the above new knowledge.

The invention will be described concretely by using a steel sheet as an example of a material to be press-formed (metal plate).

### (Method for preparing a forming limit diagram FLD)

At first, the steel sheet targeted in the invention is preferable to have a thickness of 0.6-3 mm and a ratio of limit bending radius to thickness in 90° bending (V-bending) (limit bending radius/thickness) of not less than 1.0. When the thickness is outside the above range, the chance for press forming is less, and when the ratio of limit bending radius/thickness is less than 1.0, the bendability is good and cracks dominated by ductility is caused, so that the use of the invention is needless.

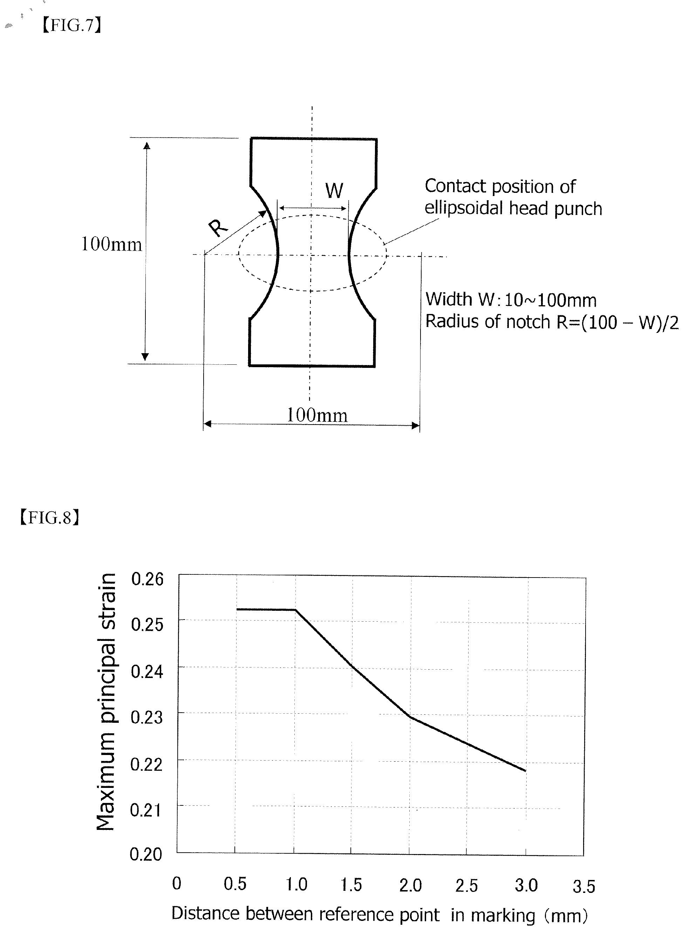

In the preparation of the forming limit diagram FLD considered with the bendability of the steel sheet, the steel sheet is shaped into test specimens having various widths within a range of 10-100 mm as shown in FIG. 7. The reason why test specimens are variously provided by changing the width is due to the fact that strain ratio (ratio of minimum principal strain to maximum principal strain) is widely changed.

Then, the surface of the test specimen is subjected to marking at a distance between reference points of 0.5-1.0 mm. The marking form (marking pattern) may be any form of circle pattern, dot pattern, grid pattern, concentric pattern and so on as long as strain quantity can be measured after the shaping. Also, the marking method may use any method of electrolytic etching, photo-etching, transcription with an ink (stamp printing) and so on, but marking-off is unfavorable because crack generation is induced. Moreover, the distance between reference points means a distance between centers of individual marking patterns. The reason why the distance between reference points is limited to 0.5-1.0 mm is mentioned later.

Next, the test specimen is bulged with a punch having a minimum curvature radius at its top of 3-10 mm. In this case, the bulging is conducted while observing the surface of the test specimen (steel sheet) at the top portion of the punch with a stereoscopic microscope, an optical microscope, a laser displacement gauge or the like. The bulging is stopped at a time that cracks are generated on the surface of the steel sheet. The top form of the punch may be any form of sphere, ellipsoidal sphere, V-shaped and the like as long as the minimum curvature radius at its top is 3-10 mm. Moreover, the reason why the minimum curvature radius at the top of the punch is limited to 3-10 mm is due to the fact that when it is less than 3 mm, strain change in the deformation region of the top portion of the punch becomes too large and it is difficult to precisely measure principal strains at the distance between reference points in marking, while when it exceeds 10 mm, the influence of the bending deformation becomes weak as mentioned later.

After the completion of the bulging, the marking position or form change at a crack-generating portion contacted with the top of the punch is measured to determine maximum principal strain and minimum principal strain at a time of generating cracks. This measurement is conducted repeatedly on the test specimens having various widths, whereby the maximum principal strain and minimum principal strain at a time of maximum principal strain and minimum principal strain at a time of generating cracks can be obtained widely. The thus obtained results measured on the maximum principal strain and the minimum principal strain are represented in a two-dimension to obtain a forming limit curve FLC.

The reason when the distance between reference points is limited to 0.5-1.0 mm is described here.

From the steel sheet B of the above Table 1 are provided test specimens having a width of 40 mm and a distance between reference points in marking variously changed within a range of 0.5-3.0 mm, which are bulged with an ellipsoidal head punch having a minimum curvature radius at its top of 10 mm as mentioned above to measure maximum principal strain at a time of generating cracks. The measured results are shown in FIG. 8 as a relation between distance between reference points in marking and maximum principal strain measured. As seen from these results, when the distance between reference points in marking is made larger than 1.0 mm, the maximum principal strain is measured small and the measurement accuracy is deteriorated. While, when the distance between reference points is made smaller than 0.5 mm, the marking is difficult and further the measuring error on the position of reference point in marking becomes large and the measuring accuracy of principal strain lowers. In the invention, therefore, the distance between reference points is a range of 0.5-1.0 mm.

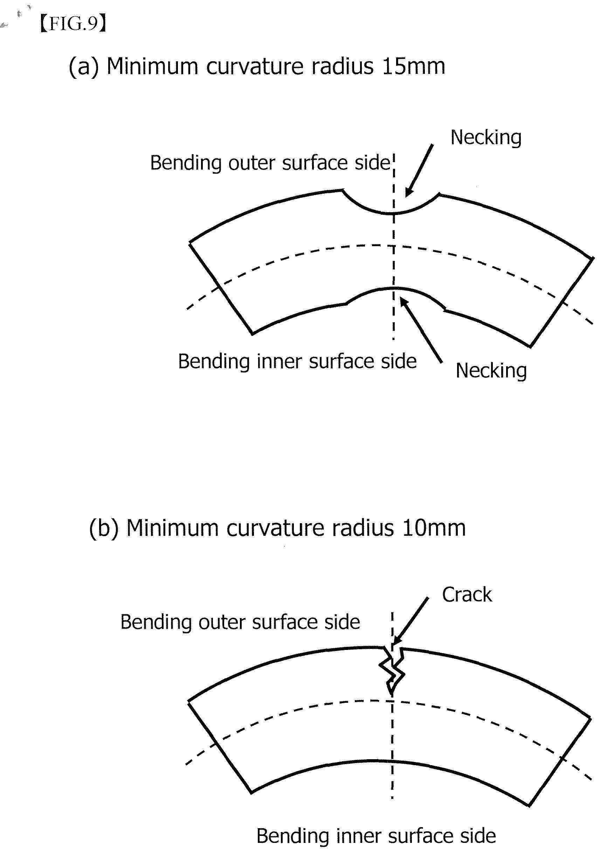

The reason why the minimum curvature radius at the top of the punch is limited not more than 10 mm is described below. FIG. 9 is a schematic view illustrating crack form when the test specimen taken out from the steel sheet B of Table 1 is bulged with ellipsoidal head punches having minimum curvature radii of 15 mm and 10 mm, respectively. When the minimum curvature radius at the top of the punch is 10 mm, the crack generated from the surface of the test specimen as shown in FIG. 9(b) is the form of crack dominated by bendability, while when the bulging is conducted with a punch having a minimum curvature radius at its top of 15 mm, the crack resulted from the progress of thickness reduction in the generated local constriction is the form of crack dominated by ductility. Therefore, the minimum curvature radius at the top of the punch is not more than 10 mm resulting in the form of crack dominated by bendability.

### (Method for predicting crack generation)

The method for predicting crack generation in the press forming according to the invention is a method comprising steps of conducting simulation for press forming a steel sheet into a desired part form with a method using shell elements such as finite element method or the like, determining transition of maximum principal strain and minimum principal strain on the steel sheet surface in each element after the press forming or maximum principal strain and minimum principal strain on the steel sheet surface in each element during the press forming, plotting the thus obtained results on FLD separately prepared by the above method, confirming whether plots of maximum principal strain and minimum principal strain in each element are existent in a crack region across a forming limit curve FLC of the FLD or a non-crack region, and predicting crack generation if one or more elements are existent in the crack region. Moreover, the prediction on the presence or absence of crack is not necessarily carried out on all elements of the press-formed part. The crack prediction may be carried out by empirically squeezing the elements into a site concerning crack to be generated and determining maximum principal strain and minimum principal strain on the steel sheet surface in the element of this site.

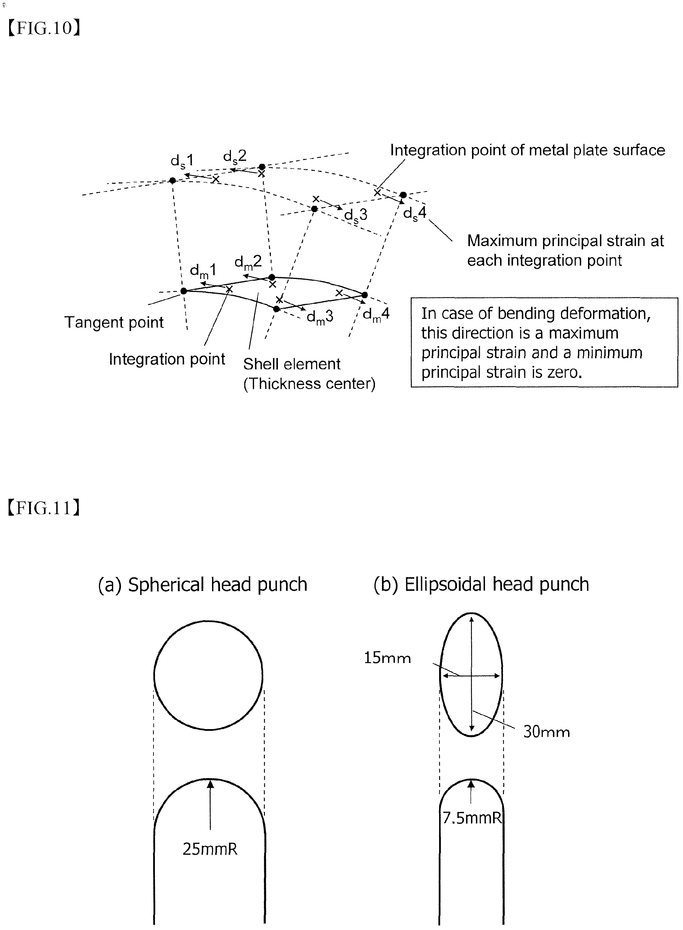

As the shell element in the above simulation can be used a shell element not considering elements in thickness direction because stress in the thickness direction can be generally ignored in case of thin steel sheets. Typically, model for simulation is frequently prepared at a position of the thickness center. For example, as shown in FIG. 10, points for calculating stress and strain (integration points) are set in each element, and integration points are also set at equal dividing positions of the thickness in the thickness direction. The maximum principal strain and minimum principal strain are calculated at the each integration point. The surface strain according to the invention means to be average value of maximum principal strains and average value of minimum principal strains calculated at the integration points on the surface of the metal plate, i.e. average value of dₛ1 to dₛ4 described by symbols in the figure. Moreover, the number and position of the integration points are determined by kinds of elements used in the simulation.

### (Method of producing press parts)

The production method of press parts according to the invention is a method wherein cracks of a metal plate in press forming are predicted by the aforementioned crack prediction method, and if crack generation is predicted, press forming under such a condition (metal plate, die) is stopped and parts are produced by press forming after being changed to conditions causing no crack. Concretely, the press forming can be conducted under conditions causing no crack by changing a form of a die used in the press forming, or by changing the forming conditions such as pressing rate and temperature, lubrication state and so on, or by changing the material of the metal plate (ductility, bendability and the like).

### EXAMPLES

Several kinds of test specimens having a narrowest width of 10-100 mm are prepared by shaping the steel sheet B shown in the above Table 1 into a form shown in FIG. 7. On a surface of the test specimen is marked a dot pattern at a distance between reference points of 1.0 mm by an electrolytic etching.

Then, the test specimen is bulged with a spherical head punch having a top minimum curvature radius of 25 mm or an ellipsoidal head punch having a top minimum curvature radius of 7.5 mm as shown in FIG. 11. Moreover, the bulging with the ellipsoidal head punch is stopped at a stage of generating crack on the steel sheet surface by observing the steel sheet surface at the top portion of the punch with a stereoscopic microscope during the bulging. On the other hand, the bulging with the spherical head punch is continued until through crack is generated in the steel sheet.

Next, a change of dot distance in the vicinity of the punch top is measured on the test specimens after the bulging, from which maximum principal strain and minimum principal strain are determined to prepare FLD. Moreover, the FLD prepared using the spherical head punch corresponds to the conventional FLD indicating the forming limit strain at a thickness center, while the FLD prepared using the ellipsoidal head punch corresponds to FLD according to the invention considering the bending crack.

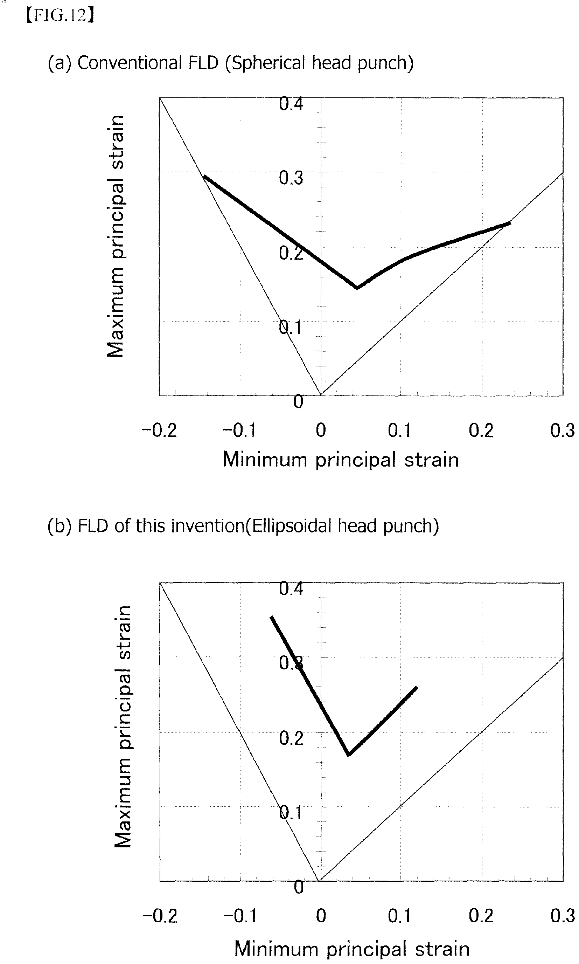

In FIG. 12 are shown FLDs prepared by the above two methods, respectively. However, the conventional FLD is a forming limit in the thickness center of the steel sheet, and the FLD of the invention is a forming limit in the surface of the steel sheet.

Then, the steel sheet B is press-formed into a simulated part form corresponding to a connecting portion of a roof rail at a top of a center pillar for an automobile shown in FIG. 4 with a die (model die) comprised of an upper die and a lower die. As a result, it has been confirmed that cracks are generated at a position of 12 mm from a bottom dead center completely closing the upper die and the lower die to each other.

Aside the above press forming, three-dimensional press forming simulation in case of forming the steel sheet B is performed using a finite element method, and thickness center at a position of crack generation and transition of maximum principal strain and minimum principal strain on the steel sheet surface are determined in the forming way until the die reaches the bottom dead center. Moreover, LS-DYNA Ver 9.71 (made by LSTC: Livermore Software Technology Corporation) is used as an analysis software of the finite element method, wherein a shell element is square at the thickness center and an element size is 1.0 mm.

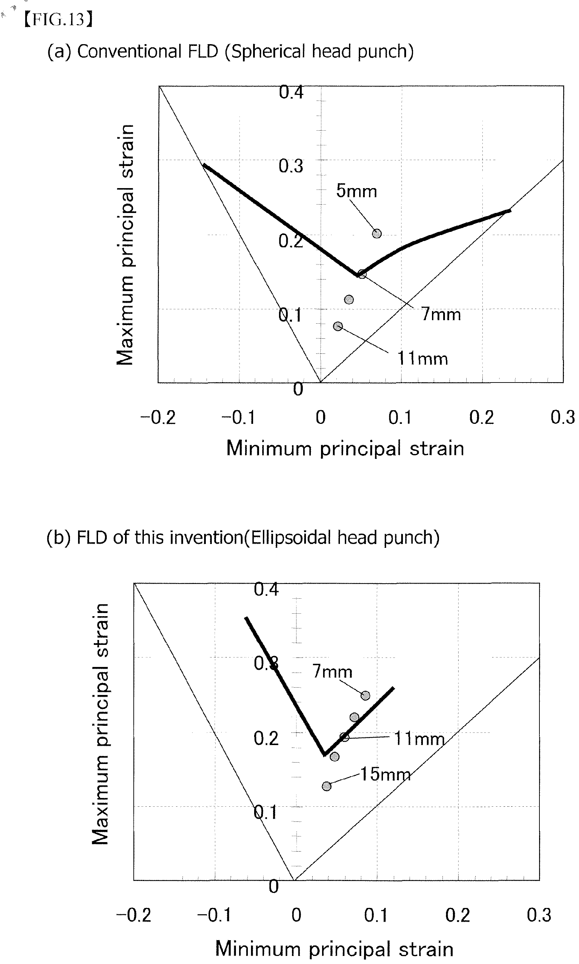

Then, the transition of maximum principal strain and minimum principal strain in the forming way at the position of crack generation determined by the above simulation is plotted on the conventional FLD and the FLD of the invention shown in FIG. 12, respectively, from which a position of die generating cracks or a position from the bottom dead center of the die transferring the plots to a crack region over FLC of each FLD is determined to obtain results shown in FIG. 13. In the conventional FLD, crack prediction is performed at the maximum principal strain and minimum principal strain at the thickness center, while in the FLD of the invention, the crack prediction is performed at the maximum principal strain and minimum principal strain on the steel sheet surface.

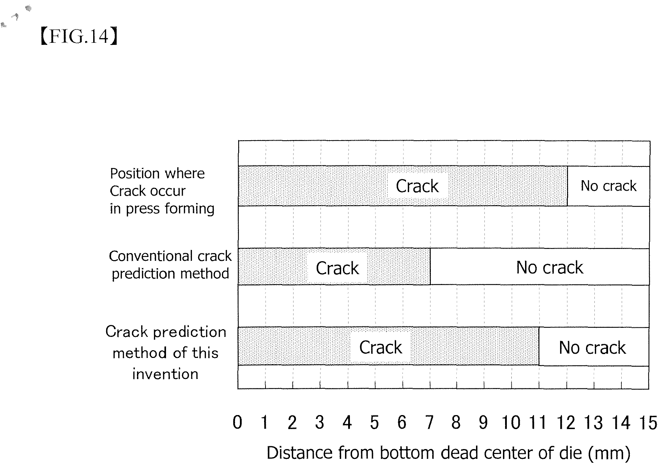

In FIG. 14 is shown the result predicted on the position of the die generating cracks in contrast to the position of the die generating cracks in the press forming. As seen from this figure, the crack generation is predicted in the crack prediction using the conventional FLD when the die is descended from the bottom dead center to a position of 7 mm, whereas the crack generation is predicted in the crack prediction using the FLD of the invention when the die is descended from the bottom dead center to a position of 11 mm, which is substantially coincident with the position of die generating cracks actually found in the press forming (position of 12 mm from the bottom dead center). From these results, it can be seen that the prediction of crack generation using the FLD of the invention is good in the precision.

### INDUSTRIAL APPLICABILITY

A case of applying to the steel sheet having a tensile strength of not less than 980 MPa grade (steel sheet of 1180 MPa grade) is shown in the above example.

### DESCRIPTION OF REFERENCE SYMBOLS

- 1:: upper die of press die
- 2:: lower die of press die
- 3:: material to be formed (metal plate, steel sheet)
- 4:: mesh division
- 5:: element

## Claims

1. A method for preparing a forming limit diagram in press forming, **characterized in that** a forming limit curve is obtained by subjecting a surface, of a steel sheet having a tensile strength of not less than 980 MPa to be press-formed, to marking so as to form a marking pattern, wherein a distance between reference points at centers of individual marking patterns is 0.5-1.0 mm, bulging the steel sheet with a punch having a top minimum curvature radius of 3-10 mm, and measuring, to determine a maximum principal strain and minimum principal strain, at a time of generating cracks on the surface of the steel sheet, at a top portion of the punch, a change in the distance between reference points of the marking pattern.

2. A method for predicting crack in press forming, **characterized in that** crack generation in the press forming is predicted based on the forming limit diagram as claimed in claim 1.

3. A method of producing press parts, **characterized in that** a steel sheet having a tensile strength of not less than 980 MPa is press-formed under conditions not causing crack by predicting the presence or absence of crack in the steel sheet using a method for predicting crack in press forming as claimed in claim 2.

## Patentansprüche

1. Verfahren zum Herstellen eines Grenzformänderungsdiagramms beim Druckumformen, **dadurch gekennzeichnet, dass** eine Grenzformänderungskurve dadurch erhalten wird, dass eine Oberfläche eines Stahlblechs mit einer Zugfestigkeit von mindestens 980 MPa, das druckumgeformt werden soll, eine Markierung, um ein Markierungsmuster zu erhalten, wobei ein Abstand zwischen Referenzpunkten in der Mitte einzelner Markierungsmuster 0,5 bis 1,0 mm beträgt, ein Wölben des Stahlblechs mittels eines Stempels, der einen oberen Mindestkrümmungsradius von 3 bis 10 mm aufweist, und eine Messung erfährt, um eine maximale Hauptdehnung und eine minimale Hauptdehnung zum Zeitpunkt einer Rissbildung an der Oberfläche des Stahlblechs, an einem oberen Abschnitt des Stempels anhand einer Änderung des Abstandes zwischen Referenzpunkten der Markierungsmuster zu bestimmen.

2. Verfahren zum Vorhersagen von Rissen beim Druckumformen, **dadurch gekennzeichnet, dass** eine Rissbildung beim Druckumformen basierend auf dem Grenzformänderungsdiagramm nach Anspruch 1 vorhergesagt wird.

3. Verfahren zum Herstellen von Formwerkstücken, **dadurch gekennzeichnet, dass** ein Stahlblech mit einer Zugfestigkeit von mindestens 980 MPa unter Bedingungen, die keine Risse verursachen, durch Vorhersagen des Vorhandenseins bzw. der Abwesenheit von Rissen in dem Stahlblech unter Verwendung eines Verfahrens zum Vorhersagen von Rissen beim Druckumformen nach Anspruch 2 druckumgeformt wird.

## Revendications

1. Procédé pour préparer un diagramme de limite de formation lors d'une formation à la presse, **caractérisé en ce qu'**une courbe de limite de formation est obtenue en soumettant une surface, constituée d'une feuille d'acier ayant une résistance à la traction supérieure à 980 MPa à former à la presse, à un marquage de manière à former un motif de marquage, dans lequel une distance entre des points de référence au niveau de centres de motifs de marquage individuels est de 0,5 à 1,0 mm, en bombant la feuille d'acier à l'aide d'un poinçon ayant un rayon de courbure minimum de partie supérieure de 3 à 10 mm, et en mesurant, pour déterminer une contrainte principale maximum et une contrainte principale minimum, à un moment de génération de fissures sur la surface de la feuille d'acier, au niveau de la partie supérieure du poinçon, un changement de la distance entre des points de référence du motif de marquage.

2. Procédé pour prévoir une fissure lors d'une formation à la presse, **caractérisé en ce que** la génération de fissure lors de la formation à la presse est prédite sur la base du diagramme de limite de formation selon la revendication 1.

3. Procédé de production de parties pressées, **caractérisé en ce qu'**une feuille d'acier ayant une résistance à la traction supérieure à 980 MPa est formée à la presse sous des conditions ne provoquant aucune fissure en prévoyant la présence ou l'absence d'une fissure dans la feuille d'acier en utilisant un procédé pour prévoir une fissure lors d'une formation à la presse selon la revendication 2.
